# EUROPEAN PATENT SPECIFICATION

(11) **EP 2 736 290 B1**
(45) Date of publication and mention of the grant of the patent: **19.08.2015**
(21) Application number: 12360079.3
(22) Date of filing: 21.11.2012
(51) Int. Cl.: H04W 52/04, H04W 52/24

(54) **Power control**
Leistungsregelung
Contrôle de puissance

(43) Date of publication of application: 28.05.2014
(73) Proprietor: ALCATEL LUCENT, 92100 Boulogne-Billancourt (FR)
(72) Inventor: Hou, Jindong, Swindon, Wiltshire, SN5 7DJ (GB); Pham, Thang, Montreal, QC H3A 3J2 (CA); Mondet, Mickael, 22300 Lannion (FR)
(74) Representative: Berthier, Karine

(56) References cited:
- EP-A1- 1 261 146
- EP-A1- 1 796 291
- EP-A1- 2 228 918
- US-A1- 2005 215 276

## Description

### FIELD OF THE INVENTION

The present invention relates to methods of selecting, at a network access node, an indication of initial target communication link quality in respect of a communication link between user equipment and said network access node in a wireless communication network, and network access nodes and computer program products operable to perform those methods.

### BACKGROUND

Wireless communication networks are known. In a cellular system, radio coverage is provided to user equipment, for example, mobile telephones, by geographical area. Those geographical areas of radio coverage are known as cells. A base station is located in each geographical area to provide the required radio coverage. A base station may support more than one cell providing coverage in the same geographical area. User equipment in the area served by a base station receives information and data from a base station and transmits information and data to a base station.

Information and data transmitted by a base station to user equipment occurs on channels of radio carriers known as downlink carriers. Information and data transmitted by user equipment to a base station occurs on uplink channels of radio carriers known as uplink carriers.

The introduction of smartphones has led to a change in the profile of data traffic handled by networks. It will be appreciated that data traffic may be particularly bursty in nature; for example, demand may be high whilst user equipment loads a website page, but then substantially zero whilst a user reads that website. Operation in a full Cell_DCH state for such bursty traffic can be particularly wasteful of battery and, thus, the ability to handle bursty traffic without entering a more dedicated state has been recognised to be beneficial.

In the uplink, the data traffic transmission occurs using an enhanced dedicated channel, and in the downlink it is sent on a high speed downlink shared channel. Such channels allow user equipment and base stations to communicate and to transmit longer and larger data packets between themselves for a time without the need for user equipment to enter a Cell_DCH state. Such arrangements allow user equipment to remain in a Cell_FACH state longer without transitioning to more dedicated RRC states, such as Cell_DCH, thereby allowing a power consumption saving.

Operation in a non-dedicated state brings advantages, but is not without technical challenges. It is desired to improve network operation for user equipment operating in non-dedicated radio states to better support smartphone data traffic profiles.

EP 2 228 918 discloses a transmission power control method in which a table of target SIR values is stored associated with different conditions. A target SIR value for a transmission is selected for a particular user equipment based on the conditions currently seen by that user equipment.

US2005/0215276 discloses a transmission power control method in which an initial target SIR value is updated during a communication link by using incremental adjustments of the value based on detected error rate.

### SUMMARY

Accordingly, a first aspect provides a method of selecting, at a network access node, an indication of initial target communication link quality in respect of a communication link between user equipment and the network access node in a wireless communication network, the target to be used to implement a user equipment transmit power control method, the method of selecting comprising: receiving a request to establish a communication link between user equipment and the network access node; determining whether there is a stored latest calculated indication of initial target communication link quality for said user equipment that has been used to implement a user equipment transmit power control method between the user equipment and the network access node during a previous transmission between said user equipment and said network access node; and, if so,
assessing the relevance of the stored indication by comparing at least one parameter indicative of network condition experienced by the user equipment upon storage of the stored indication and at least one parameter indicative of ambient condition being experienced by the user equipment against a parameter-specific change threshold, and if the comparison reveals a change within the parameter-specific change threshold, selecting the stored indication of initial target communication link quality to implement user equipment transmit power control methods.

The first aspect recognises that the introduction of smartphones has led to a change in the profile of data traffic handled by networks. It will be appreciated that data traffic may be particularly bursty in nature; for example, demand may be high whilst user equipment loads a website page, but then substantially zero whilst a user reads that website. Operation in a full Cell_DCH state for such bursty traffic can be particularly wasteful of battery and, thus, the ability to handle bursty traffic without entering a more dedicated state has been recognised to be beneficial.

User equipment may operate in various modes in, for example, a UMTS telecommunications network. On initial turning on of user equipment in a cell, it will typically operate in "idle mode". Once it synchronizes and attaches itself to a base station it gains radio resource control (RRC) connection and is referred to as being in a connected mode. User equipment in idle mode does not have a radio resource control connection. If user equipment is RRC connected it can be in one of four different RRC states: Cell_DCH, Cell_FACH, Cell_PCH or URA_PCH states.

User equipment typically moves into Cell_DCH state when its traffic is high, since in such a state the user equipment is allocated a dedicated channel on which to transmit and receive data from a base station. In UMTS network architecture, user equipment can be in Cell_DCH state when it is expected to have a high volume of traffic. Operation in a Cell_DCH state is typically highly demanding of battery power.

Historically, user equipment operated, when not in Cell_DCH state, using a random access channel (RACH) on the uplink and a base station will operate to communicate with user equipment using a forward access channel (FACH). RACH and FACH had a very small data carrying ability and in WCDMA or UMTS systems a capability for user equipment and base stations to operate and communicate data traffic therebetween using a shared or common resource on downlink and uplink when user equipment is in a Cell_FACH state has been introduced.

In the uplink, the data traffic transmission occurs using an enhanced dedicated channel, and in the downlink it is sent on a high speed downlink shared channel. Such channels allow user equipment and base stations to communicate and to transmit longer and larger data packets between themselves for a time without the need for user equipment to enter a Cell_DCH state. Such arrangements allow user equipment to remain in a Cell_FACH state longer without transitioning to more dedicated RRC states, such as Cell_DCH, thereby allowing a power consumption saving.

The power control techniques used by user equipment and network access nodes within a network are typically suited to use when user equipment is operating in a Cell_DCH state. As described, in such a state data transmissions are typically likely to last for a significant length of time and, thus, setting up the relationships necessary for outer loop power control via messaging through an RNC has been deemed to be worth the time taken since overall operation of a network can be optimised.

Dynamic power control techniques offer a means for a network to operate more efficiently. However, when operating in a Cell_FACH state, data transmissions to and from user equipment are typically characterised by short bursts. As such, the relatively long delay incurred by passing information from user equipment and base stations to an RNC by traditional methods would typically be too long for power control techniques usually used for user equipment operating in a Cell_DCH state to be set up and used before a data burst occurring in a Cell_FACH state ends. As a result, dynamic power control techniques using dynamically selected outer and inner loop methods are not usually supported whilst user equipment operates in a Cell_FACH state. In particular, rather than setting an outer loop power control target dynamically, a network access node is typically operable to apply a fixed or static outer loop target to any user equipment operating in a non Cell_DCH state when it requests resources and inner loop techniques are based on that static or fixed target value. It will be appreciated that such an approach may be particularly wasteful and/or inefficient.

The first aspect recognises that one way in which to implement a power control method is to assess the last target value stored by a network access node in respect of user equipment operating in a network. Thus, rather than use a fixed value, or wait to receive a dynamically generated outer loop power control target value from a network control node, for example, RNC, it is possible to store the last such target value used by the network access node in controlling each user and, subject to conditions not having changed significantly, such that the last used value is completely inappropriate or irrelevant to operation of the user, using that stored value as an outer loop target value.

If a network access node determines that there is no stored target value, in some embodiments, the network access node is operable to implement a fixed or static predetermined initial target value as set by a control node of the network, or as selected on commissioning of the network access node within the network. In some embodiments, the network access node may be operable to calculate or select an initial target value in accordance with the fourth aspect and embodiments thereof as described in more detail below. It will, of course, be appreciated that a stored value may have resulted from a calculation or selection in accordance with the fourth aspect.

In one embodiment, the communication link comprises a common E-DCH channel. In one embodiment, the user equipment is operating in a non-Cell_DCH state, or non-dedicated RRC state. In some embodiments, the user equipment is operating in a Cell_FACH RRC state. Accordingly, the first aspect may find particular use when a network access node does not have the luxury of a dedicated RRC state and the associated time required for network signalling to dynamically calculate an appropriate target value, as is the case when user equipment is operating in a non dedicated state.

In one embodiment, the user equipment transmit power control method comprises an inner loop power control method. In one embodiment, the indication of initial target communication link quality in respect of a communication link between user equipment and said network access node in a wireless communication network comprises an initial target signal to interference ratio to be used in outer loop power control. Accordingly, the first aspect finds particular use for implementing an outer loop initial target value which is to be used by user equipment and a network access node when implementing inner loop power control in respect of a communication link.

In one embodiment, the parameter indicative of network condition experienced by the user equipment comprises time of storage of the stored indication and the parameter-specific change threshold comprises an elapsed time period. Accordingly, in order to decide whether a given stored value is valid, a network access node may be operable to compare calculated elapsed time between the storing of a target value and the look up of the stored value with a pre-defined threshold. If it is determined that the calculated elapsed time is greater than the threshold, the validity timer is deemed to have expired and the stored calculated SIR target value is assessed to be obsolete since it is too old to be of relevance to the user equipment.

In one embodiment, the parameter indicative of network condition experienced by the user equipment comprises an indication of transmission mode of the user equipment in relation to the stored indication and the parameter-specific change threshold comprises establishing whether an indication of transmission mode of the user equipment has changed beyond a selected threshold. In some embodiments, the parameter indicative of network condition experienced by the user equipment comprises an indication of noise experienced by the user equipment in relation to the stored indication and the parameter-specific change threshold comprises establishing whether an indication of noise experienced by the user equipment has changed beyond a selected threshold.

In one embodiment, the parameter indicative of network condition experienced by the user equipment comprises an indication of network loading experienced by the user equipment in relation to the stored indication and the parameter-specific change threshold comprises establishing whether an indication of network loading experienced by the user equipment has changed beyond a selected threshold.

Accordingly, besides or in addition to timer-based validity checks, other mechanisms may also be used in some embodiments of methods to be used to assess the relevance of a stored target SIR value to current operation of user equipment.

A netowrk access node may, for example, check if the user equipment has changed its TTI mode of operation since the last data session. If so, a new initial SIR Target may be calculated in preference to implementing a stored target value.

According to some embodiments, a network access node, for example, base station, may be operable to assess whether noise and/or loading conditions, indicated by, for example, a number of "active" users in a cell, being experienced by user equipment has changed since a value was stored. If the conditions are determined to have changed in a manner which means they are likely to not be relevant to the current operation of the user equipment, for example, noise, loading and/or active user parameters are determined to have altered in a manner which do not meet validity criteria, the stored SIR Target from a previous transmission are likely to be obsolete.

If determined to be irrelevant due to a change in load, radio and/or activity changes experienced in a cell, a NodeB may be operable to discard a stored SIR target value and calculate a new initial SIR target value, for example in accordance with aspects described above. In cases where radio conditions are assessed by a network control node to have fundamentally changed, according to some embodiments, regardless of validity timer expiry, a stored SIR target may be determined to be irrelevant since conditions have fundamentally changed and and stored SIR target will be discarded.

In order to prevent premature reset of a stored target value, in case of noise or loading level changes, a stored value may only be discarded if it is determined to have exceeded a preconfigured change threshold. If the change threshold is exceeded the NodeB may be operable, in some embodiments, to fallback to calculate a new initial SIR target for user equipment initiating a new transmission session.

In some embodiments, the parameter-specific change threshold is dynamically updatable in response to measured system performance. According to some embodiments, a validity timer threshold may be implemented in such a way that it is responsive to dynamic changes in conditions. That is to say, the validity timer or threshold may be implemented such that there is an initial default value which is updated based upon statistical analysis performed by the NodeB to optimize performance of user equipment operating in the coverage area supported by that NodeB. For example, a NodeB may be operable to implement a range of different validity timers over a period of operation and determine, via measurement statistics, which validity timer value(s) result in a best system performance, for example, best capacity, or best overall throughput. Similar dynamic adjustments can be made in relation to other monitored parameters.

A second aspect provides a computer program product operable, when executed on a computer, to perform the method of the first aspect.

A third aspect provides a network access node operable to select an indication of initial target communication link quality in respect of a communication link between user equipment and the network access node in a wireless communication network, the target to be used to implement a user equipment transmit power control method, the network access node comprising: reception logic operable to receive a request to establish a communication link between user equipment and the network access node; determination logic operable to determine whether there is a stored latest calculation indication of initial target communication link quality for said user equipment that has been used to implement a user equipment transmit power control method between the user equipment and the network access node during a previous transmission between the user equipment and the network access node; and, if so, assessment logic operable to assess the relevance of the stored indication by comparing at least one parameter indicative of network condition experienced by the user equipment upon storage of the stored indication and at least one parameter indicative of ambient condition being experienced by the user equipment against a parameter-specific change threshold, and selection logic operable to select the stored indication of initial target communication link quality to implement user equipment transmit power control methods if the comparison reveals a change within the parameter-specific change threshold.

In one embodiment, the communications link comprises a common E-DCH channel.

In one embodiment, the user equipment is operating in a Cell_FACH RRC state.

In one embodiment, the user equipment transmit power control method comprises an inner loop power control method.

In one embodiment, the indication of initial target communication link quality in respect of a communication link between user equipment and said network access node in a wireless communication network comprises an initial target signal to interference ratio to be used in outer loop power control.

In one embodiment, the parameter indicative of network condition experienced by the user equipment comprises time of storage of the stored indication and the parameter-specific change threshold comprises an elapsed time period.

In one embodiment, the parameter indicative of network condition experienced by the user equipment comprises an indication of transmission mode of the user equipment in relation to the stored indication and the parameter-specific change threshold comprises establishing whether an indication of transmission mode of the user equipment has changed beyond a selected threshold.

In one embodiment, the parameter indicative of network condition experienced by the user equipment comprises an indication of noise experienced by the user equipment in relation to the stored indication and the parameter-specific change threshold comprises establishing whether an indication of noise experienced by the user equipment has changed beyond a selected threshold.

In one embodiment, the parameter indicative of network condition experienced by the user equipment comprises an indication of network loading experienced by the user equipment in relation to the stored indication and the parameter-specific change threshold comprises establishing whether an indication of network loading experienced by the user equipment has changed beyond a selected threshold.

In one embodiment, the parameter-specific change threshold is dynamically updatable in response to measured system performance.

As described above, dynamic power control techniques offer a means for a network to operate more efficiently. However, when operating in a Cell_FACH state, data transmissions to and from user equipment are typically characterised by short bursts. As such, the relatively long delay incurred by passing information from user equipment and base stations to an RNC by traditional methods would typically be too long for power control techniques usually used for user equipment operating in a Cell_DCH state to be set up and used before a data burst occurring in a Cell_FACH state ends. As a result, dynamic power control techniques using dynamically selected outer and inner loop methods are not usually supported whilst user equipment operates in a Cell_FACH state. In particular, rather than setting an outer loop power control target dynamically, a network access node is typically operable to apply a fixed or static outer loop target to any user equipment operating in a non Cell_DCH state when it requests resources and inner loop techniques are based on that static or fixed target value. It will be appreciated that such an approach may be particularly wasteful and/or inefficient.

One way in which to implement a power control method is to assess the last target value stored by a network access node in respect of user equipment operating in a network. Thus, rather than use a fixed value, or wait to receive a dynamically generated outer loop power control target value from a network control node, for example, RNC, it is possible for a network access node to use information which is available to it, either directly, or by means of a measurement report made by user equipment requesting a communications link to select a more appropriate initial target value for the purposes of power control than a completely static value.

In one embodiment, the request to establish a communication link between user equipment and the network access node comprises a request to establish a communication link using a common channel. In some embodiments, the communication link comprises a common E-DCH channel. In some embodiments, the user equipment is operating in a non-dedicated state, for example, a Cell_FACH RRC state. In one embodiment, the user equipment transmit power control method comprises an inner loop power control method. In one embodiment, the indication of initial target communication link quality in respect of a communication link between user equipment and the network access node in a wireless communication network comprises an initial target signal to interference ratio to be used in outer loop power control.

In one embodiment, the at least one ambient operational parameter comprises an indication of ambient operational parameter received from the user equipment. Accordingly, conditions as actually experienced by user equipment, for example, as reported to a network access node via a measurement report or similar may be taken into account when selecting an initial target value.

In embodiments, the at least one ambient operational parameter reported by the user equipment may comprise one or more of an indication of: preferred transmit time interval regime; measured path loss; reported noise experienced at the user equipment.

According to one embodiment, the at least one ambient operational parameter comprises an indication of ambient operational parameter determined by the network access node. The network access node may be in the best position, for example, to determine ambient overall conditions within a cell, for example, loading, interference or noise levels being experienced within a cell. In some embodiments, the at least one ambient operational parameter comprises one or more of: an indication of: noise level measured over an observation period; an indication of network load level.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates schematically some main components of a wireless telecommunications system;
Figure 2 illustrates schematically some factors which may be taken into account when setting an initial SIR target according to one example;
Figure 3 illustrates schematically a method of determining an appropriate SIR target to be used in relation to user equipment according to one example;
Figure 4 illustrates schematically a method of determining an appropriate SIR target to be used in relation to user equipment according to one example;
Figure 5 illustrates schematically a method of determining an appropriate SIR target to be used in relation to user equipment according to one example.

### DESCRIPTION OF THE EMBODIMENTS

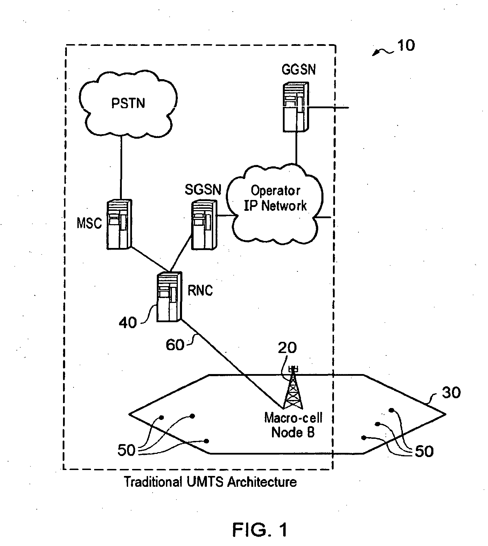

Figure 1 illustrates schematically the main components of a wireless telecommunications system 10 according to one embodiment. User equipment 50 roam through the wireless telecommunications system. Base stations 20 are provided which support areas of radio coverage 30. A number of such base stations 20 are provided and are distributed geographically in order to provide a wide area of coverage to user equipment 50. When user equipment is within an area served by a base station 30, communications may be established between the user equipment and the base station over associated radio links. Each base station typically supports a number of sectors within the geographical area of service 30.

Typically, a different antenna within a base station supports each associated sector. Each base station 20 has multiple antennas. It will be appreciated that Figure 1 illustrates a small sub-set of a total number of user equipment and base stations that may be present in a typical communications system.

The wireless communications system is managed by a radio network controller (RNC) 40. The RNC 40 controls operation of the wireless telecommunications system by communicating with a plurality of base stations over a backhaul communications link 60. The RNC also communicates with user equipment 50 via each base station and, thus, effectively manages a region of the entire wireless communications network 10. User equipment communicates with base stations 20 by transmitting data and information on channels known as uplink or reverse channels, and a base station 20 communicates with user equipment 50 by transmitting data and information on radio channels known as downlink or forward channels.

User equipment may operate in various modes in, for example, a UMTS telecommunications network. On initial turning on of user equipment in a cell, it will typically operate in "idle mode". Once it synchronizes and attaches itself to a base station it gains radio resource control (RRC) connection and is referred to as being in a connected mode. User equipment in idle mode does not have a radio resource control connection. If user equipment is RRC connected it can be in one of four different RRC states: Cell_DCH, Cell_FACH, Cell_PCH or URA_PCH states.

User equipment typically moves into Cell_DCH state when its traffic is high, since in such a state the user equipment is allocated a dedicated channel on which to transmit and receive data from a base station. In UMTS network architecture, user equipment can be in Cell_DCH state when it is expected to have a high volume of traffic. Operation in a Cell_DCH state is typically highly demanding of battery power.

Historically, user equipment operated, when not in Cell_DCH state, using a random access channel (RACH) on the uplink and a base station will operate to communicate with user equipment using a forward access channel (FACH). RACH and FACH had a very small data carrying ability and in WCDMA or UMTS systems a capability for user equipment and base stations to operate and communicate data traffic therebetween using a shared or common resource on downlink and uplink when user equipment is in a Cell_FACH state has been introduced. In the uplink, the data traffic transmission occurs using an enhanced dedicated channel, and in the downlink it is sent on a high speed downlink shared channel. Such channels allow user equipment and base stations to communicate and to transmit longer and larger data packets between themselves for a time without the need for user equipment to enter a Cell_DCH state. Such arrangements allow user equipment to remain in a Cell_FACH state longer without transitioning to more dedicated RRC states, thereby allowing a power consumption saving.

It will be appreciated that data traffic may be particularly bursty in nature; for example, demand may be high whilst user equipment loads a website page, but then substantially zero whilst a user reads that website. Operation in a full Cell_DCH state for such bursty traffic can be particularly wasteful of battery and, thus, the ability to handle bursty traffic without entering a more dedicated state is beneficial.

When operating in a Cell_FACH state, data transmissions to and from user equipment are typically characterised by short bursts. As such, the relatively long delay incurred by passing information from user equipment and base stations via an RNC to set up outer loop power control targets as would be the case for user equipment operating in a dedicated state would typically be too long for a suitable target value to be set and used in relation to a communication link before the data burst transmission occurring in a Cell_FACH state ends. As a result, traditional non-dedicated outer loop power control targets are implemented by means of a static target value held at a base station and used for all user equipment in a cell operating using common channels. In other words, dynamic outer loop power control is not usually supported whilst user equipment operates in a Cell_FACH state.

Typically no method to implement dynamic OLPC (Outer Loop Power Control) is supported for user equipment operating in a CELL_FACH or idle mode RRC state, also known, for example, as an eFACH or enhanced CELL_FACH state.

It will be appreciated that it is possible for a network access node, for example, Node B, or "base station" to be operable to control fast outer loop power control for user equipment operating in an eFACH RRC state, and that outer loop power control techniques can apply to eFACH (enhanced Forward Access Channels) to be used for uplink transmissions. A key issue of relevance to implementation of such a layer one control scheme is that of how to configure an initial signal to interference (SIR) target value on which inner loop power control is to be based, thereby allowing initiation of a typically bursty transmission session using eFACH techniques. It will be appreciated that a method to set an initial target is required to suit the bursty and discontinuous nature of eFACH transmissions in a way which allows dynamic configuration, validation and adjustment of the initial outer loop power control target value, rather than a static target SIR value for eFACH transmissions irrespective of varying network conditions.

Due to varying radio conditions within a network, an actual SIR level required to achieve a satisfying service is always in variance is likely to differ from a single, pre-set, static value. A dynamically set initial SIR target upon which inner loop power control methods can be based are useful to avoid power waste and excessive interference. Such dynamically set initial target SIR values may be of particular use in scenarios in which a higher uplink data rate is required, or in which a concurrent 2/10ms TTI (transit time interval) transmission regime is offered. Depending upon which transmission regime is chosen, a different SIR requirement may be appropriate.

Aspects recognise that despite the bursty nature of eFACH transmissions, those transmissions may be used by a network access node, for example, a Node B or base station, in order to calculate or determine an initial SIR target for outer loop power control purposes, and that initial target may be used to implement inner loop power control techniques.

A static target value for user equipment operating in a CELL_FACH state may be implemented, but aspects described herein offer methods which may allow for the dynamic validation or adjustment of an initial SIR target to be used by user equipment operating in a CELL_FACH state as an algorithm input for inner loop power control techniques. Aspects and embodiments may be implemented at initiation of a bursty transmission session of user equipment operating in an enhanced CELL_FACH RRC state.

### Overview

Before discussing aspects and embodiments in any more detail, first an overview of aspects will be provided.

According to one aspect described herein, a method of setting an initial SIR target at the beginning of each eFACH user equipment transmission session allows a network access node to utilise dynamic network radio condition to determine appropriate target SIR requirement variances. Such a method may be especially suitable for short and chatty transmissions made by smartphones operating in an eFACH mode. Those transmissions are typically associated with smartphone apps, for example: instant messaging (IM), Qchat, APNS, or similar, and according to which user equipment is typically operable to make transmissions associated with those apps using common E-DCH resources whilst operating in a CELL_FACH state.

### Setting or adjusting an initial SIR Target for Outer Loop Power Control

According to a first aspect an initial SIR Target may be set by layer one network signalling. In particular, the target to be implemented for individual user equipment and dynamically tuned by a network access node, for example, a NodeB or base station, according to criteria indicative of conditions being experienced by the individual user equipment. Accordingly, embodiments may use one or more of the following criteria indicative of conditions being experienced by individual user equipment to offer an adapative initial target setting scheme which are operable to initialise the target value dynamically:
According to some embodiments, two possible initial SIR target values may be configured at a network access node, one intended for use if user equipment is operating to use a 10ms transmit time interval (TTI) and the other intended for use if user equipment is operating to use a 2ms TTI transmission regime. If user equipment requests one of a 10ms TTI or 2ms TTI operation, which may be recognised bv the network access node, for example, by appropriate use, by user equipment, of a reserved preamble signature when requesting communication with the network. On receipt of a reserved preamble, a base station, for example, NodeB, may be operable to apply a corresponding initial SIR target.

According to some embodiments, an initial SIR target may be determined as a function of radio condition experienced by user equipment operating in a cell supported by a network access node. Indications of radio condition may, for example, comprise measured path loss and/or a measured delta above a noise level or similar values reported by user equipment to a netwrok access node when requesting a common channel. Such a function could define, for example, an inversely proportional relationship between an initial SIR target and adjustment criteria relating to that initial SIR target. According to such embodiments, an initial SIR target can be set such that it is suitable for a dynamically changing radio condition or load condition being experienced by user equipment operating within a cell.

In order to obtain noise raise level as an input criterion any appropriate technique may be used including, for example, directly measuring the noise level experienced by user equipment within the network. In one example, a network access node, for example, NodeB, is oeprable to monitor noise levels experienced over an observation period. A base station, for example, NodeB, may be operable to use the latest monitored noise level together with expected incremental loading to estimate a reasonable noise level.

According to some embodiments, an initial SIR target may be determined as a function of radio condition experienced by user equipment operating in a cell supported by a network access node. Typically a network access node, for example, NodeB has information regarding the number of active users that are active within its coverage region. In particular, the NodeB may have information regarding which users might be using common channels, such as E-DCH channels, or other available radio channels. According to some embodiments, a base station may be operable to use user activity information to set an initial SIR target.

In some embodiments, a NodeB may be operable to obtain or derive an "active factor" by means of statistical measurement or techniques. That active factor may be used to offer an indication of user activity within a cell or region of coverage supported by a base station. For example, if the base station assesses an "active factor" of 10%, and the total number of possible eFACH user equipment in a cell numbers 100, a NodeB may calculate that around 10 (10% x 100 users) are likely to be simultaneous active eFACH user equipment at a given moment. Such calculations may offer a reactive indication of noise and/or loading level experiened within a cell to be used when setting an initial SIR target value.

A network access node, for example, NodeB can be operable to use a mapping table which correlates a relationship between a number of active eFACH users in a cell and an appropriate initial SIR target. That mapping table may be set on initial configuration of a network, or may be created or adapted by the network access node in relation to collected empirical data whilst operational.

Either a single adapative factor or a combination of factors similar to those described above may be used to determine an initial SIR target suitable for user equipment to start eFACH transmission. For example, a scheme according to which consideration of both a requested TTI mode and current radio or cell load conditions may be used by a radio network access node to determine an appropriate initial SIR target for user equipment.

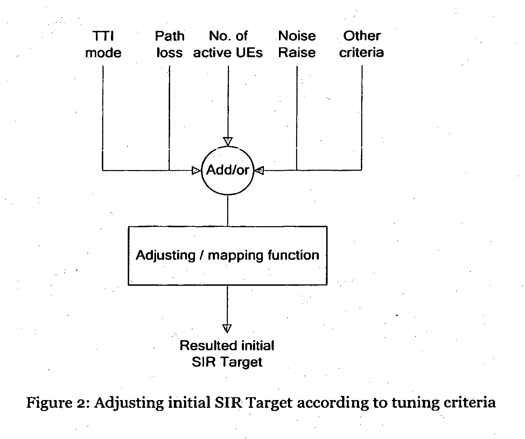

Figure 2 illustrates schematically a non-exhaustive list factors which may be taken into account, either alone or in combination, when setting an initial SIR target according to one example.

### Validation of a stored SIR target

As with calls which require dedicated resource, users may finish a call which uses a common resource and move to another location. A SIR target used for outer loop power control may be relevant and useable for a next transmission, but the relevance of a target held by a network access node in relation to user equipment is dependent upon the extent to which conditions being experienced by user equipment have altered.

According to one aspect, the relevance of a stored SIR target held by a network access node in relation to user equipment is checked to ensure it is likely to be of relevance to ambient conditions being experienced by user equipment. According to one embodiment, the check may comprise assessing the freshness of a stored target by checking whether a threshold time period has elapsed since storing the target vale. Such a threshold is selected such that a stored target is not too old to become irrelevant to a new location of a user and new radio or load conditions being experienced by that user on initiation of a new request for communication on a common channel. A target value from a previous data session may be relevant and useable for the next transmission session only if the two sessions are not separated by a inactivity period which is too long. If a period of inactivity between transmission sessions is too long, user equipment may have moved to a different area within a cell, and be experiencing totally different radio or load characteristics. The threshold time period may be configured to take account of likely user equipment behaviour in a given cell.

According to one embodiment, a network access node may be operable to implement a validity check in relation to a stored initial target SIR value held in relation to user equipment by means of a validity timer. The validity timer can be configurable, and set, for example, to infinity, zero or any value between infinity and zero.

Aspects may be combined such that a network access node, for example, NodeB, is operable to maintain a calculated SIR target table, in which each eFACH capable user equipment has an entry containing its stored latest calculated SIR target value. If no calculated SIR target value is available for a given UE, the table entry for that user equipment may be empty. Each table entry may also have an associated validity timer, which tracks elapsed time between when the latest calculated SIR target value was stored in the table, that value having been entered, for example, after a user equipment finishes a call or releasea a common E-DCH resource, and the moment a netowrk access node, for example, NodeB, checks a stored value for that user equipment at initiation of a normal E-DCH transmission after collision resolution.

In order to decide whether a given stored value is valid, a network access node may be operable to compare calculated elapsed time between the storing of a target value and the look up of the stored value with a pre-defined threshold. If it is determined that the calculated elapsed time is greater than the threshold, the validity timer is deemed to have expired and the stored calculated SIR target value is assessed to be obsolete since it is too old to be of relevance to the user equipment.

A network access node according to embodiments may then be operable to set the status of the value stored in the table in relation to that user equipment to INVALID. As a default, the status of a target value stored in the table in relation to each user equipment may be set to VALID. Use of a configurable validity timer can thus be used to reflect the potential relevance of a stored calculated SIR target value held at a network access node.

Table 1 sets out schematically an example table stored at a network access node in accordance with an embodiment.

**Table 1: Calculated SIR Target Table for eFACH users**

| | Calculated SIR Target | Validity Timer |
|---|---|---|
| UE 1 | SIR X | A |
| UE 2 | SIR Y | B |
| ... | | |
| ... | | |
| UE | SIR Z | C |

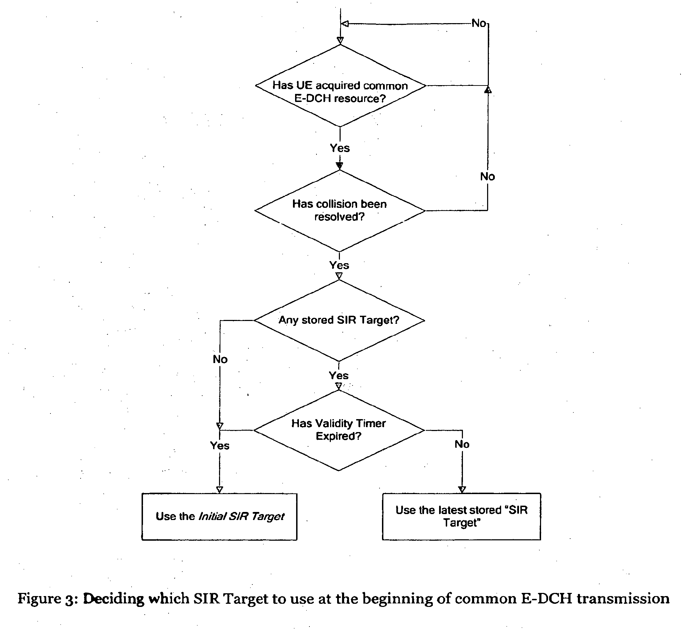

Figure 3 illustrates schematically a method of determining an appropriate SIR target to be used in relation to user equipment according to one example. Once user equipment has acquired a common E-DCH resource and has finished a collision resolution phase, it is operable to start to use the acquired (and collision-resolved) common channel, for example, an E-DCH, for normal uplink eFACH data transmissions. As illustrated in Figure 3, at commencement of user equipment data transmissions, a network access node is operable to initiate outer loop power control procedures and determine an appropriate initial SIR target.

On commencement of data transmission from user equipment, a network access node, for exampe, NodeB, is operable to implement a method such as that illustrated on Figure 3. The NodeB takes steps to look up whether there is already a stored calculated SIR target value being held for the given user eqipment. If there is no stored calculated initital SIR target, the NodeB according to the illustrated example is operable to use one or more indications of ambient radio or load conditions being experienced by the user equipent to calculate an initial SIR target value, based upon which inner loop power control techniques may be implemented as normal E-DCH transmissions occur. If the NodeB finds a stored calculated SIR target value for the given UE, it is operable according to the illustrated example, to perform a validity check. If the validity check indicates that a stored calculated SIR target value is invalid, for example, because a validity timer has exceeded a threshold, the NodeB is operable to discard the stored value and instead to use one or more indications of ambient radio or load conditions being experienced by the user equipent to calculate an initial SIR target value, based upon which inner loop power control techniques may be implemented as normal E-DCH transmissions occur. If, however, the validity check reveals the stored value meets validity criteria, the NodeB is operable to utilise the stored calculated SIR target value to implement inner loop power control techniques.

### Dynamic Thresholds and a Validity Timer

According to some embodiments, a validity timer threshold may be implemented in such a way that it is responsive to dynamic changes in conditions. That is to say, the validity timer or threshold may be implemented such that there is an initial default value which is updated based upon statistical analysis performed by the NodeB to optimize performance of user equipment operating in the coverage area supported by that NodeB. For example, a NodeB may be operable to implement a range of different validity timers over a period of operation and determine, via measurement statistics, which validity timer value(s) result in a best system performance, for example, best capacity, or best overall throughput.

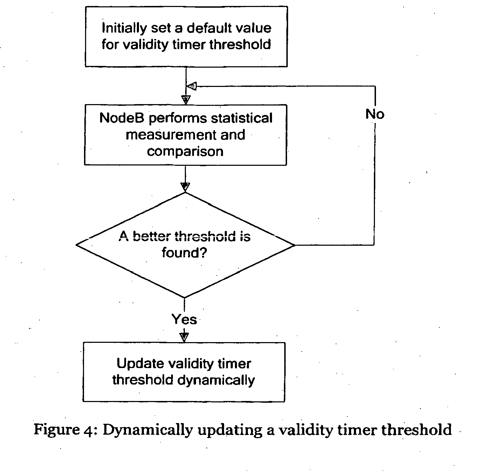

Figure 4 illustrates schematically a method of determining an appropriate SIR target to be used in relation to user equipment according to one example. In particular, Figure 4 illustrates schematically factors which may be taken into account when determining or setting a validity timer to be implemented when assessing relevance of a stored Initial Target SIR value held by a NodeB in relation to user equipment.

### Other Validity Check Mechanisms

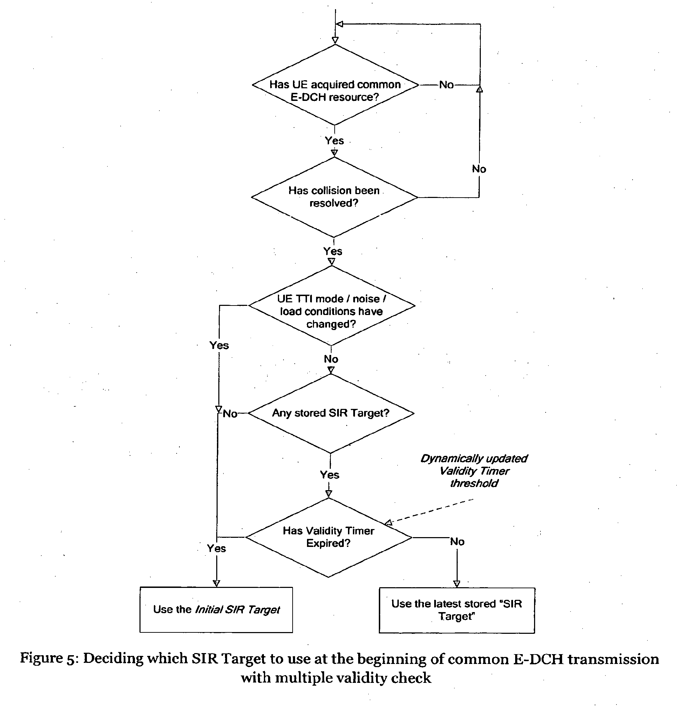

Besides timer-based validity checks, other mechanisms may also be used in some embodiments of methods to be used to assess the relevance of a stored target SIR value to current operation of user equipment. Figure 5 illustrates schematically a method of determining an appropriate SIR target to be used in relation to user equipment according to one example, using one or more of a range of validity checks.

A NodeB may, for example, check if the user equipment has changed its TTI mode of operation since the last data session. If so, a new initial SIR Target may be calculated in preference to implementing a stored target value.

According to some embodiments, a network access node, for example, base station, may be operable to assess whether noise and/or loading conditions, indicated by, for example, a number of "active" users in a cell, being experienced by user equipment has changed since a value was stored. If the conditions are determined to have changed in a manner which means they are likely to not be relevant to the current operation of the user equipment, for example, noise, loading and/or active user parameters are determined to have altered in a manner which do not meet validity criteria, the stored SIR Target from a previous transmission are likely to be obsolete.

If determined to be irrelevant due to a change in load, radio and/or activity changes experienced in a cell, a NodeB may be operable to discard a stored SIR target value and calculate a new initial SIR target value, for example in accordance with aspects described above. In cases where radio conditions are assessed by a network control node to have fundamentally changed, according to some embodiments, regardless of validity timer expiry, a stored SIR target may be determined to be irrelevant since conditions have fundamentally changed and and stored SIR target will be discarded.

In order to prevent premature reset of a stored target value, in case of noise or loading level changes, a stored value may only be discarded if it is determined to have exceeded a preconfigured change threshold. If the change threshold is exceeded the NodeB may be operable, in some embodiments, to fallback to calculate a new initial SIR target for user equipment initiating a new transmission session. Such a threshold can be either static or dynamically tuned in a manner similar to that described above in relation to a dynamic threshold for the validity timer. It will be appreciated that extra validity check mechanisms can be stand-alone or complement the validity-timer-based mechanism described above.

Aspects and embodiments enable a network to quickly and dynamically match an outer loop SIR target value requirement, to suit smartphone traffic typically transmitted when user equipment operates in an enhanced CELL_FACH state. Aspects aim to mitigate deficiencies associated with a static SIR target including excessive interference, user equipment battery waste and insufficient available user equipment available power level which can cause call drops and issues with key performance indicators. Aspects may allow better smartphone packet switched service user experience. Aspects and embodiments may be of use in networks in which high throughput in eFACH and the support of concurrent 2/10ms TTI is expected.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its scope as defined by the claims. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions.

## Claims

1. A method of selecting, at a network access node, an indication of initial target communication link quality in respect of a communication link between user equipment and said network access node in a wireless communication network, said target to be used to implement a user equipment transmit power control method, said method of selecting comprising:
receiving a request to establish a communication link between user equipment and said network access node;
determining whether there is a stored latest calculated indication of initial target communication link quality for said user equipment that has been used to implement a user equipment transmit power control method between said user equipment and said network access node during a previous transmission between said user equipment and said network access node; and, if so,
assessing the relevance of the stored indication by comparing at least one parameter indicative of network condition experienced by said user equipment upon storage of said stored indication and at least one parameter indicative of ambient condition being experienced by said user equipment against a parameter-specific change threshold, and if said comparison reveals a change within said parameter-specific change threshold, selecting said stored indication of initial target communication link quality to implement a user equipment transmit power control method.

2. A method according to claim 1, wherein said parameter indicative of network condition experienced by said user equipment comprises time of storage of said stored indication and said parameter-specific change threshold comprises an elapsed time period.

3. A method according to claim 1 or claim 2, wherein said parameter indicative of network condition experienced by said user equipment comprises an indication of transmission mode of said user equipment in relation to said stored indication and said parameter-specific change threshold comprises establishing whether an indication of transmission mode of said user equipment has changed beyond a selected threshold.

4. A method according to any preceding claim, wherein said parameter indicative of network condition experienced by said user equipment comprises an indication of noise experienced by said user equipment in relation to said stored indication and said parameter-specific change threshold comprises establishing whether an indication of noise experienced by said user equipment has changed beyond a selected threshold.

5. A method according to any preceding claim, wherein said parameter indicative of network condition experienced by said user equipment comprises an indication of network loading experienced by said user equipment in relation to said stored indication and said parameter-specific change threshold comprises establishing whether an indication of network loading experienced by said user equipment has changed beyond a selected threshold.

6. A method according to any preceding claim, wherein said parameter-specific change threshold is dynamically updatable in response to measured system performance.

7. A method according to claim 1, wherein said at least one parameter indicative of ambient condition being experienced by said user equipment comprises one or more of:
an indication of: preferred transmit time interval regime; measured path loss; reported noise experienced at said user equipment.

8. A computer program product operable, when executed on a computer, to perform the method of any one of claims 1 to 7.

9. A network access node operable to select an indication of initial target communication link quality in respect of a communication link between user equipment and said network access node in a wireless communication network, said target to be used to implement a user equipment transmit power control method, said network access node comprising:
reception logic operable to receive a request to establish a communication link between user equipment and said network access node;
determination logic operable to determine whether there is a stored latest calculation indication of initial target communication link quality for said user equipment that has been used to implement a user equipment transmit power control method between said user equipment and said network access node during a previous transmission between said user equipment and said network access node; and, if so,
assessment logic operable to assess the relevance of the stored indication by comparing at least one parameter indicative of network condition experienced by said user equipment upon storage of said stored indication and at least one parameter indicative of ambient condition being experienced by said user equipment against a parameter-specific change threshold, and
selection logic operable to select said stored indication of initial target communication link quality to implement user equipment transmit power control methods if said comparison reveals a change within said parameter-specific change threshold.

## Patentansprüche

1. Verfahren zur Auswahl an einem Netzwerkzugangsknoten einer Angabe zur anfänglichen Ziel-Kommunikationsverbindungsqualität in Bezug auf eine Kommunikationsverbindung zwischen einem Benutzerendgerät und besagtem Netzwerkzugangsknoten in einem drahtlosen Kommunikationsnetzwerk, wobei besagtes Ziel dazu verwendet wird, ein Steuerungsverfahren für die Übertragungsleistung des Benutzerendgeräts zu implementieren, wobei besagte Auswahlmethode umfasst:
Empfang einer Anfrage zum Herstellen einer Kommunikationsverbindung zwischen einem Benutzerendgerät und besagtem Netzwerkzugangsknoten;
Bestimmen, ob eine späteste berechnete Angabe der anfänglichen Ziel-Kommunikationsverbindungsqualität für besagtes Benutzerendgerät gespeichert ist und verwendet wurde, um während einer früheren Übertragung zwischen besagtem Benutzerendgerät und besagtem Netzwerkzugangsknoten für das Benutzerendgerät ein Steuerungsverfahren für die Übertragungsleistung zwischen besagtem Benutzerendgerät und besagtem Netzwerkzugangsknoten zu implementieren; und wenn dem so ist,
Bewerten der Relevanz der gespeicherten Angabe durch das Vergleichen von mindestens einem Parameter, der für die Netzwerkbedingung indikativ ist, die besagtes Benutzerendgerät beim Speichern besagter gespeicherter Angabe festgestellt hat, mit mindestens einem Parameter, der indikativ ist für die Umgebungsbedingung, die besagtes Benutzerendgerät im Vergleich zu einem parameterspezifischen Veränderungsgrenzwert festgestellt hat, und wenn besagter Vergleich eine Veränderung innerhalb des besagten, parameterspezifischen Veränderungsgrenzwerts ergibt, das Auswählen besagter gespeicherter Angabe der anfänglichen Ziel-Kommunikationsverbindungsqualität zum Implementieren eines Steuerungsverfahrens für die Übertragungsleistung des Benutzerendgeräts.

2. Verfahren aus Anspruch 1, wobei besagter, Parameter, der indikativ ist für die Netzwerkbedingung, die besagtes Benutzerendgerät festgestellt hat, einen Speicherzeitpunkt besagter gespeicherter Angabe umfasst und besagter parameterspezifischer Veränderungsgrenzwert einen Ablaufzeitraum umfasst.

3. Verfahren nach Anspruch 1 oder 2, wobei besagter Parameter, der indikativ ist für die Netzwerkbedingung, die besagtes Benutzerendgerät festgestellt hat, eine Angabe zum Übertragungsmodus besagten Benutzerendgeräts in Bezug auf besagte gespeicherte Angabe umfasst und besagter parameterspezifischer Veränderungsgrenzwert das Feststellen umfasst, ob sich eine Angabe zum Übertragungsmodus besagten Benutzerendgeräts über einen ausgewählten Grenzwert hinaus verändert hat.

4. Verfahren nach jeglichem der vorgenannten Ansprüche, wobei besagter Parameter, der indikativ ist für die Netzwerkbedingung, die besagtes Benutzerendgerät festgestellt hat, eine Angabe zum Rauschen umfasst, das von besagtem Benutzerendgerät in Bezug auf besagte gespeicherte Angabe festgestellt wurde, und besagter parameterspezifischer Veränderungsgrenzwert das Feststellen umfasst, ob sich eine Angabe zum Rauschen, das besagtes Benutzerendgerät festgestellt hat, über einen ausgewählten Grenzwert hinaus verändert hat.

5. Verfahren nach jeglichem der vorgenannten Ansprüche, wobei besagter Parameter, der indikativ ist für die Netzwerkbedingung, die besagtes Benutzerendgerät festgestellt hat, eine Angabe zur Netzwerkbelastung umfasst, die von besagtem Benutzerendgerät in Bezug auf besagte gespeicherte Angabe festgestellt wurde, und besagter parameterspezifischer Veränderungsgrenzwert das Feststellen umfasst, ob sich eine Angabe zur Netzwerkbelastung, die besagtes Benutzerendgerät festgestellt hat, über einen ausgewählten Grenzwert hinaus verändert hat.

6. Verfahren nach jeglichem der vorgenannten Ansprüche, wobei besagter parameterspezifischer Veränderungsgrenzwert sich in Abhängigkeit des gemessenen Leistungsverhaltens des Systems dynamisch aktualisieren lässt.

7. Verfahren nach Anspruch 1, wobei besagter mindestens eine Parameter, der indikativ ist für die Netzwerkbedingung, die besagtes Benutzerendgerät festgestellt hat, eine oder mehrere der folgenden Anzeigen umfasst: bevorzugtes Übertragungszeitintervall-Regime; gemessener Pfadverlust; berichtetes Rauschen, das bei besagtem Benutzerendgerät festgestellt wurde.

8. Computerprogramm-Produkt, betreibbar für das Durchführen des Verfahrens eines beliebigen der Ansprüche 1 bis 7, wenn es auf einem Computer ausgeführt wird.

9. Netzwerkzugangsknoten, ausgelegt für die Auswahl an einem Netzwerkzugangsknoten einer Angabe zur anfänglichen Ziel-Kommunikationsverbindungsqualität in Bezug auf eine Kommunikationsverbindung zwischen einem Benutzerendgerät und besagtem Netzwerkzugangsknoten in einem drahtlosen Kommunikationsnetzwerk, wobei besagtes Ziel dazu verwendet wird, ein Steuerungsverfahren für die Übertragungsleistung des Benutzerendgeräts zu implementieren, wobei besagter Netzwerkzugangsknoten umfasst:
eine Empfangslogik, ausgelegt für den Empfang einer Anfrage zum Herstellen einer Kommunikationsverbindung zwischen einem Benutzerendgerät und besagtem Netzwerkzugangsknoten;
eine Ermittlungslogik, ausgelegt für das Bestimmen, ob eine späteste berechnete Angabe der anfänglichen Ziel-Kommunikationsverbindungsqualität für besagtes Benutzerendgerät gespeichert ist und verwendet wurde, um während einer früheren Übertragung zwischen besagtem Benutzerendgerät und besagtem Netzwerkzugangsknoten für das Benutzerendgerät ein Steuerungsverfahren für die Übertragungsleistung zwischen besagtem Benutzerendgerät und besagtem Netzwerkzugangsknoten zu implementieren; und wenn dem so ist,
eine Bewertungslogik, ausgelegt für die Bewertung der Relevanz der gespeicherten Angabe durch den Vergleich von mindestens einem Parameter, der indikativ ist für die Netzwerkbedingung, die besagtes Benutzerendgerät festgestellt hat, als besagte gespeicherte Angaben gespeichert wurden, und mindestens einem Parameter, der indikativ ist für die Umgebungsbedingung, die besagtes Benutzerendgerät im Vergleich zu einem parameterspezifischen Veränderungsgrenzwert festgestellt hat, und
eine Auswahllogik, ausgelegt für die Auswahl besagter gespeicherter Angaben der anfänglichen Ziel-Kommunikationsverbindungsqualität zum Implementieren von Steuerungsverfahren für die Übertragungsleistung des Benutzerendgeräts, wenn besagter Vergleich eine Veränderung innerhalb des besagten, parameterspezifischen Veränderungsgrenzwerts ergibt

## Revendications

1. Procédé de sélection, sur un noeud d'accès à un réseau, d'une indication de qualité de liaison de communication cible initiale en relation avec une liaison de communication entre un équipement utilisateur et ledit noeud d'accès au réseau dans un réseau de communication sans fil, ladite cible devant être utilisée pour mettre en oeuvre un procédé de commande de puissance de transmission d'équipement utilisateur, ledit procédé de sélection comprenant les étapes suivantes :
recevoir une requête d'établissement d'une liaison de communication entre l'équipement utilisateur et ledit noeud d'accès au réseau ;
déterminer si une dernière indication calculée de la qualité de liaison de communication cible initiale est stockée pour ledit équipement utilisateur, laquelle a été utilisée pour mettre en oeuvre un procédé de commande de puissance de transmission d'équipement utilisateur entre ledit équipement utilisateur et ledit noeud d'accès au réseau pendant une transmission précédente entre ledit équipement utilisateur et ledit noeud d'accès au réseau, et si c'est le cas,
évaluer la pertinence de l'indication stockée par la comparaison d'au moins un paramètre indicatif de l'état du réseau expérimenté par ledit équipement utilisateur suite au stockage de ladite indication stockée et d'au moins un paramètre indicatif de l'état ambiant expérimenté par ledit équipement utilisateur par rapport à un seuil de changement spécifique au paramètre, et si ladite comparaison révèle un changement dans ledit seuil de changement spécifique au paramètre, sélectionner ladite indication stockée de qualité de liaison de communication cible initiale pour mettre en oeuvre un procédé de commande de puissance de transmission d'équipement utilisateur.

2. Procédé selon la revendication 1, dans lequel ledit paramètre indicatif de l'état du réseau expérimenté par ledit équipement utilisateur comprend une durée de stockage de ladite indication stockée et ledit seuil de changement spécifique au paramètre comprend une période temporelle écoulée.

3. Procédé selon la revendication 1 ou 2, dans lequel ledit paramètre indicatif de l'état du réseau expérimenté par ledit équipement utilisateur comprend une indication du mode de transmission dudit équipement utilisateur en relation avec ladite indication stockée et ledit seuil de changement spécifique au paramètre comprend l'établissement du fait qu'une indication de mode de transmission dudit équipement utilisateur a changé ou non au-delà d'un seuil sélectionné.

4. Procédé selon l'une quelconque des revendications précédentes, dans lequel ledit paramètre indicatif de l'état du réseau expérimenté par ledit équipement utilisateur comprend une indication du bruit expérimenté par ledit équipement utilisateur en relation avec ladite indication stockée et ledit seuil de changement spécifique au paramètre comprend l'établissement du fait qu'une indication du bruit expérimenté par ledit équipement utilisateur a changé ou non au-delà d'un seuil sélectionné.

5. Procédé selon l'une quelconque des revendications précédentes, dans lequel ledit paramètre indicatif de l'état du réseau expérimenté par ledit équipement utilisateur comprend une indication de la charge du réseau expérimentée par ledit équipement utilisateur en relation avec ladite indication stockée et ledit seuil de changement spécifique au paramètre comprend l'établissement du fait qu'une indication de charge du réseau expérimentée par ledit équipement utilisateur a changé ou non au-delà d'un seuil sélectionné.

6. Procédé selon l'une quelconque des revendications précédentes, dans lequel ledit seuil de changement spécifique au paramètre peut être mis à jour dynamiquement en réponse à la performance mesurée du système.

7. Procédé selon la revendication 1, dans lequel ledit paramètre indicatif de l'état ambiant expérimenté par l'équipement utilisateur comprend un ou plusieurs des éléments suivants : une indication : du régime d'intervalle temporel de transmission préféré ; de la perte de chemin mesurée ; du bruit signalé expérimenté par ledit équipement utilisateur.

8. Produit de programme informatique pouvant fonctionner, lorsqu'il est exécuté sur un ordinateur, pour exécuter le procédé selon l'une quelconque des revendications 1 à 7.

9. Noeud d'accès au réseau pouvant fonctionner pour sélectionner une indication de qualité de liaison de communication cible initiale en relation avec une liaison de communication entre un équipement utilisateur et ledit noeud d'accès au réseau dans un réseau de communication sans fil, ladite cible devant être utilisée pour mettre en oeuvre un procédé de commande de puissance de transmission d'équipement utilisateur, ledit noeud d'accès au réseau comprenant :
une logique de réception pouvant fonctionner pour recevoir une requête d'établissement d'une liaison de communication entre l'équipement utilisateur et ledit noeud d'accès au réseau ;
une logique de détermination pouvant fonctionner pour déterminer si une dernière indication calculée de la qualité de liaison de communication cible initiale est stockée pour ledit équipement utilisateur, laquelle a été utilisée pour mettre en oeuvre un procédé de commande de puissance de transmission d'équipement utilisateur entre ledit équipement utilisateur et ledit noeud d'accès au réseau pendant une transmission précédente entre ledit équipement utilisateur et ledit noeud d'accès au réseau, et si c'est le cas,
une logique d'évaluation pouvant fonctionner pour évaluer la pertinence de l'indication stockée par la comparaison d'au moins un paramètre indicatif de l'état du réseau expérimenté par ledit équipement utilisateur suite au stockage de ladite indication stockée et d'au moins un paramètre indicatif de l'état ambiant expérimenté par ledit équipement utilisateur par rapport à un seuil de changement spécifique au paramètre, et
une logique de sélection pouvant fonctionner pour sélectionner ladite indication stockée de qualité de liaison de communication cible initiale pour mettre en oeuvre un procédé de commande de puissance de transmission d'équipement utilisateur si ladite comparaison révèle un changement dans ledit seuil de changement spécifique au paramètre.
